## Europäisches Patentamt

## European Patent Office

## Office européen des brevets

(11) Numéro de publication: **0 123 649**
**B1**

(12) **FASCICULE DE BREVET EUROPÉEN**

(45) Date de publication du fascicule du brevet:
**08.04.87**

(21) Numéro de dépôt: **84810133.3**

(22) Date de dépôt: **21.03.84**

(51) Int. Cl.⁴: **A 23 L 1/225,** A 23 L 1/48

---

(54) Condiment allégé à base de moutarde et procédé pour sa fabrication.

---

(30) Priorité: **25.03.83 CH 1651/83**

(43) Date de publication de la demande:
**31.10.84 Bulletin 84/44**

(45) Mention de la délivrance du brevet:
**08.04.87 Bulletin 87/15**

(84) Etats contractants désignés:
**AT BE CH DE FR GB IT LI LU NL SE**

(56) Documents cité:
**DE-C-108 340**
**FR-A-2 195 406**
**FR-A-2 360 264**
**US-A-2 203 643**

**Le dossier contient des informations techniques
présentées postérieurement au dépôt de la
demande et ne figurant pas dans le présent
fascicule.**

(73) Titulaire: **BATTELLE MEMORIAL INSTITUTE, 7
route de Drize, CH- 1227 Carouge/Genève (CH)**

(72) Inventeur: **Giddey, Claude, 59, route de Chêne, CH-
1206 Genève (CH)**
Inventeur: **Dove, Georges, Quai du Cheval Blanc 1,
CH- 1227 Carouge (CH)**

(74) Mandataire: **Dousse, Blasco, 7, route de Drize, CH-
1227 Carouge/Genève (CH)**

EP 0 123 649 B1

## Description

La présente invention a pour objet un assaisonnement ou condiment allégé à base de moutarde broyée, vinaigre et eau ainsi qu'un procédé de fabrication de celui-ci.

Les produits condimentaires à base de moutarde utilisés principalement en Europe continentale et dénommés familièrement "moutarde" sont généralement constitués de graines de moutarde broyées en une farine (celle-ci pouvant être dégraissée ou non), ce broyat étant dispersé dans du vinaigre aromatisé ou non, soumis à la fermentation enzymatique pour en libérer le principe actif (isothiocyanate d'allyle) puis finalement homogénéisé et micronisé en une pâte plus ou moins consistante. Ce type de "moutarde" est donc à distinguer de la moutarde en poudre utilisée principalement dans les pays anglo-saxons et dont l'arôme ne se développe qu'après mélange à l'eau juste avant emploi.

Le condiment "moutarde" actuellement sur le marché (qui comprend diverses catégories: moutarde de table douce, mi-forte, forte, au raifort, de Dijon, etc. suivant la nature des espèces de graines de moutarde utilisées et des additifs) est un produit de densité d'environ 1 dont la stabilité au stockage n'est pas toujours exemplaire. Dans certains cas, la moutarde tend à former des phases distinctes, une phase solide et une phase liquide, ce qui lui donne un aspect peu appétissant.

On a donc cherché à remédier à cet inconvénient et, simultanément, à réaliser un produit de faible densité en accord avec les principes actuels de développement de produits allégés: mousses de caramel, mousses de yaourt, etc...). On notera à ce sujet l'existence du document US-A-2,203,643 (MUSHER) qui décrit un procédé pour rendre plus épais ou consistants des aliments normalement liquides, dont la moutarde (page 1, col. 1, 1.29); ce procédé est basé sur l'introduction et la dispersion dans l'aliment de liants tels qu' amidon, pectine, gélatine, etc.. (page 1, col.1, 1.50 et page 2, col.2, 1.50) et de corps gras solides (page 1, col.1, 1.52). Le produit terminé se présente sous forme de gel ou de pâte épaisse (page 1. col. 2, 1.9-10). Dans l'exemple 13, (page 4, col. 2, l. 61 à page 5, col.1, l. 12) on décrit le "battage" d'une composition pour lui conférer une structure aérée.

Ainsi, l'assaisonnement ou condiment de l'invention à base de moutarde tel que défini à la revendication 1 est caractérisé par le fait qu'il comprend, à l'état dispersé, un gaz inerte ou de l'air lui donnant une structure mousseuse de densité de 0,77 ou même moins.

Pour favoriser la formation de cette mousse, le présent condiment contient, de préférence, un agent moussant ou foisonnant, par exemple du blanc d'oeuf en neige ou des extraits de polypeptides tels que les hydrolysats de caséine, de gluten, de soja et autres substances susceptibles de former une mousse par battage en présence d'air ou d'un gaz quelconque, par exemple l'azote. La quantité d'agent moussant se situe de préférence entre 0,5 et 2% du poids du condiment avant moussage mais ces quantités, non critiques, peuvent être dépassées. Pour stabiliser la mousse au stockage, le présent condiment peut également contenir des agents stabilisateurs tels que gélatine, pectine, alginate de propylène glycol et autres. La quantité en poids de l'agent stabilisateur est de 1 à 3,5 % du poids du mélange avant foisonnement. Bien entendu, outre les additifs déjà mentionnés, la présente mousse pourra contenir d'autres additifs couramment utilisés dans la moutarde et, notamment, du sel, du sucre et divers adjuvants organoleptiques tels que poivre, raifort, céleri, épices, aromates divers et autres.

Pour préparer la mousse de moutarde suivant l'invention, on peut partir de moutarde du commerce, c'est-à-dire le condiment en pâte évoqué plus haut, à laquelle on ajoute, avec agitation, successivement le stabilisateur puis l'agent moussant préalablement mis en solution dans de l'eau. Lorsqu'on ajoute l'agent moussant, celui-ci peut déjà se trouver à l'état de mousse; au cas contraire, on procède au battage ultérieur du mélange. Le préférence, on utilise de la moutarde contenant une quantité d'eau quelque peu inférieure à la normale (par exemple 85 à 90%) ceci de manière que le manque en eau soit compensé lors de l'apport de la solution aqueuse de l'agent foisonnant. Comme agent foisonnant, on utilise avantageusement, mis à part l'albumine de l'oeuf, le produit dénomé "'Hyfoama" marque commerciale de la société LEDERINCK en Hollande ou le produit dénommé "Biambel" marque commerciale de la société BEL INDUSTRIES, Paris.

Le préférence, on ajoute le stabilisateur à une température supérieure à la temprature ambiate, par exemple entre 40 et 70° C. Quant à l'agent foisonnant on l'ajoute, de préférence, à température ordinaire ou même, en refroidissant légèrement, c'est-à-dire à une température comprise entre 10 et 70° C, de préférence entre 10 et 20° C.

Après addition de l'agent foisonnant, et si celui-ci n'avait pas été déjà battu au préalable, on soumet le mélange à un battage avec incorporation d'air ou d'un gaz inerte, par exemple de l'azote, jusqu'à obtention de la densité désirée, par exemple comprise entre 0,7 et 0,77. Le battage peut s'effectuer suivant les moyens habituels de préparation d'une mousse (crème Chantilly par exemple) ou au moyen d'un foisonneur industriel en continu.

Le mousse ainsi obtenue est onctueuse, légère, généralement nettement plus savoureuse que la moutarde d'origine et d'une excellente stabilité au stockage. En effet, après six semaines ou même six mois au repos sur un rayon, on ne constate aucune tendance à la séparation en deux phases, ce qui est surprenant en raison de l'état de la technique (voir par exemple le brevet US-A-4.244.982) suivant lequel certains produits alimentaires en mousses contenant du "Hyfoama" marque commerciale comme agent moussant, perdent rapidement leur structure aérée au stockage.

Les moutardes convenant à la fabrication du présent condiment aéré sont de variétés quelconques; en effet, le présent procédé s'applique aux moutardes de Dijon (contenant essentiellement de la moutarde brune (Brassica nigra), aux moutardes fortes, mi-fortes, au raifort, ainsi qu'aux moutardes douces dites de table (ou moutardes allemandes) cotenant principalement la moutarde blanche (Sinapsis alba). Les agents moussats à bases d'hydrolysats de protéines conviennent mieux pour la fabrication de mousses de moutardes fortes. Pour les moutardes douces, l'albumine d'oeuf convient mieux.

Les compositions commerciales de moutardes utilisables comme mentionné ci-dessus comprennent en général 18-30% en poids de semences de moutarde. Lorsqu'il s'agit de moutarde blanche, les graines sont d'abord pressées pour en extraire l'huile (30-40%) puis le tourteau est réduit en poudre (farine) qu'on disperse dans le vinaigre pour maturation. Lorsqu'il s'agit de moutarde noire (moutarde de Dijon), les graines sont directement broyées dans le vinaigre. La teneur en vinaigre est d'environ 1,5 à 48 du poids de la composition (50-70% d'eau).

Après maturation, c'est-à-dire libération enzymatique du principe aromatisant, on enlève (notamment dans le cas de la moutarde de Dijon), les résidus fibreux provenant des coques de graines. En variante, ces coques sont broyées entre des meules de pierre. Puis on ajoute les additifs restants, c'est-à-dire sel (1-7%), sucre et, le cas échéant, d'autres aromates ou épices, la quantité de celles-ci étant généralement égale ou inférieure à 0,5%); puis on homogénéise le tout pour obtenir la moutarde du commerce.

Les exemples qui suivent illustrent l'invention:

**Exemple 1**

On a utilisé une moutarde commerciale type de Dijon où la quantité d'eau était d'environ 10% inférieure à la normale.

Cette moutarde avait la composition pondérale suivante:
Graines broyées de Brassica nigra 32 %
Vinaigre 17 %
Sel 7%
Acide tartrique 0,6%
Eau 43,4%

A 1 kg de cette moutarde on a ajouté à 60°C, avec agitation, 2,0 g de gélatine comme stabilisant, de manière à obtenir un mélange (A). Par ailleurs, on a dissous 1,2 g de Hyfoama (marque commerciale) (caseïnate de calcium partiellement hydrolysé enzymatiquement) dans 80-90 ml d'eau de manière à obtenir une solution (B). On a ensuite mélangé A et B à une température de 20 à 60°C. puis on a placé le mélange dans un batteur à crème Chantilly et on a effectué le battage à température ambiante avec introduction d'air jusqu'à obtention d'une mousse de densité = 0,75.

La mousse présentait une couleur plus claire que la moutarde d'origine et son goût était plus "rond" et plus savoureux, (quoiqu'aussi intense) que celui de la moutarde d'origine. Au bout de quelques jours de stockage, on a constaté la formation dans la masse, sans que diminue son volume global, de bulles d'air de dimensions appréciables (de l'ordre de 0,5 à 2-3 mm de diamètre). La mousse s'est alors entièrement stabilisée sous cette forme et aucun changement de goût ou d'aspect n'a été constaté pendant les six semaines suivantes.

**Exemple 2**

On a procédé comme dans l'Exemple 1 à partir des mêmes quantités des mêmes ingrédients de base. La moutarde broyée (dégraissée) provenait de graines de moutarde noire et de moutarde blanche dans un rapport approximatif 1:4. Comme additifs stabilisateurs, on a utilisé, pour 1 kg du mélange des ingrédients de base, 1 g de gélatine et 0,3 g de glycérol. Puis on a ajouté 1,2 g de Hyfoama (marque commerciale) et on a battu le tout avec de l'air jusqu'à une densité de 0,73.

**Exemple 3**

On a répété la procédure de l'Exemple 1 et utilisé exactement les mêmes ingrédients en quantités identiques à l'exception de l'agent foisonnant qui était ici constitué de 1,2 g de "Biambel 170" (marque commerciale). Après battage en présence d'air, on a obtenu une mousse de densité 0,76 d'excellente stabilité au stockage et de goût excellent.

**Exemple 4**

On a procédé exactement comme dans l'Exemple 1 avec, pour seule différence, le remplacement des 2 g de gélatine par 0,1 g de pectine de pomme. Après battage, on a obtenu une mousse onctueuse de densité 0,77 stable au stockage.

**Exemple 5**

On a utilisé une moutarde mi-forte de composition suivante:
% en poids

eau 48,7
vinaigre 19,8
moutarde blanche 22,3
sel 4,7
moutarde noire 4,0
aromates 0,5
100

Pendant sa fabrication, on a ajouté a la composition ci-dessus, entre 40 et 70° C 0,5% en poids de pectine comme stabilisateur.

On a préparé par ailleurs une solution aqueuse d'albumine d'oeufs en dispersant et dissolvant sous agitation 16 kg d'albumine en poudre dans 84 l d'eau. Puis on a introduit cette solution à la vitesse de 650 ml/min dans un foisonneur industriel REN (marque commercial) (de RAVANETTI, Parme, Italie) dans lequel on a injecté simultanément 40 l d'air à la minute sous une pression de 3 bar. On a ainsi obtenu un agent foisonnant sous forme d'une mousse de densité 0,05. On a alors fait parvenir simultanément par des conduits séparés la mousse d'agent foisonnant et la composition de moutarde dans un mélangeur continu à chicanes déflectrices (type ERESTAT (marque commerciale), XYZET, Allemange) maintenu à température ambiate, les deux phases se rejoignant dans un tube commun à l'entrée du mélangeur, le tout de manière à obtenir, après mélange intime des composants, une mousse de moutarde de densité 0,70 fournie à la cadence de 21,5 l/min. La mousse de moutarde ainsi obtenue a été conditionnée en pots au moyen d'une conditionneuse à pistons doseurs fournissant des portions de 500 ml.

La mousse de moutarde ainsi stockée s'est conservée plus de six mois à température ordinaire sans modification de densité ni de propriétés organoleptiques.

## Revendications

1. Assaisonnement ou condiment allégé contenant essentiellement de la graine de moutarde broyée, du vinaigre et de l'eau, caractérisé par le fait qu'il contient encore un gaz inerte ou de l'air dispersé, le tout de manière qu'il présente une structure mousseuse de densité 0,77 ou inférieure.

2. Assaisonnement ou condiment suivant la revendication 1, caractérisé par le fait qu'il contient, en plus, un ou plusieurs agents stabilisateurs et un ou plusieurs agents foisonnants.

3. Assaisonnement ou condiment suivant la revendication 2, caractérisé par le fait qu'il contient, en plus, d'autres additifs d'assaisonnet ou organoleptiques.

4. Procédé pour préparer l'assaisonnement ou condiment suivant la revendication 2, procédé suivant lequel mélange une masse de moutarde commerciale avec un agent stabilisateur et qu'au mélange ainsi obtenu on ajoute, sous agitation un agent foisonnant ou moussant capable de fournir une mousse par battage en présence d'air ou de gaz, caractérisé en ce qu'on ajoute l'agent stabilisateur entre 40 et 70°C et l'agent foisonnant entre 10 et 70°C, de manière à donner à la masse une structure mousseuse de densite 0,77 ou inférieure.

5. Procédé suivant la revendication 4, caractérisé par le fait que ledit battage est effectué après introduction dudit agent foisonnant dans le mélange de moutarde et d'agent stabilisant.

6. Procédé suivant la revendication 4, caractérisé par le fait que ledit battage est effectué avant introduction dudit agent foisonnant dans le mélange de moutarde et d'agent stabilisateur, l'agent foisonnant étant ainsi déjà sous forme de mousse.

7. Procédé suivant la revendication 6, caractérisé par le fait que l'agent foisonnant est de l'albumine d'oeuf.

8. Procédé suivant la revendication 4, caractérisé par le fait que l'agent stabilisateur est choisi parmi la gélatine, la pectine et les alginates et l'agent foisonnant est choisi par les hydrolysats de caséine, de protéines de soja et de gluten.

9. Procédé suivant la revendication 4, caractérisé par le fait qu'on utilise de 1 à 3,5 % en poids d'agent stabilisateur et de 0,5 à 2% en poids d'agent foisonnant, ces poids étant donnés par rapport au total de la composition du condiment.

10. Procédé suivant la revendication 7, caractérisé par le fait que l'agent foisonnant est ajouté à une température de 10 - 20°C.

## Patentansprüche

1. Zutat oder Gewürz, die bzw. das im wesentlichen zerstoßenes Senfkorn, Essig und Wasser enthält, dadurch gekennzeichnet, daß sie bzw. es noch ein dispergiertes inertes Gas oder Luft enthält, derart daß eine schaumartige Struktur mit einer Dichte von 0,77 oder weniger gegeben ist.

2. Zutat oder Gewürz nach Anspruch 1, dadurch gekennzeichnet, daß sie bzw. es zusätzlich noch ein oder mehrere Stabilisierungsmittel und ein oder mehrere Quellmittel enthält.

3. Zutat oder Gewürz nach Anspruch 2, dadurch gekennzeichnet, daß sie bzw. es zusätzlich noch weitere Würzzusätze oder Organoleptika enthält.

4. Verfahren zur Herstellung der Zutat oder des Gewürzes nach Anspruch 2, bei welchem Verfahren man eine Masse aus kommmerziellem Senf mit einem Stabilisator vermischt und bei dem man der so erhaltenen Mischung unter Rühren ein Quellmittel oder Schäummittel zusetzt, das geeignet ist, durch Schlagen in Gegenwart von Luft oder Gas einen Schaum zu bilden, dadurch gekennzeichnet, daß man den Stabilsator zwischen 40 und 71°C und das Quellmittel zwischen 10 und 70°C derart zusetzt, daß sich eine Masse mit einer schaumförmigen Struktur einer Dichte von 0,77 oder weniger ergibt.

5. Verfahren nach Anspruch 4, dadurch gekennzeichnet, daß das Schlagen nach Einbringen des Quellmittels und des Stabilisators in die Senfmischung durchgeführt wird.

6. Verfahren nach Anspruch 4, dadurch gekennzeichnet, daß das Schlagen vor dem Einbringen des Quellmittels und des Stabilisators in die Senfmischung durchgeführt wird, wobei das Quellmittel schon in Schaumform vorliegt.

7. Verfahren nach Anspruch 6, dadurch gekennzeichnet, daß das Quellmittel Eiweiß ist.

8. Verfahren nach Anspruch 4, dadurch gekennzeichnet, daß der Stabilisator aus Gelatine, Pektin und den Alginaten und das Quellmittel aus den Hydrolysaten von Kasein, den proteinen von Soja und Gluten ausgewählt wird.

9. Verfahren nach Anspruch 4, dadurch gekennzeichnet, daß man 1 bis 3,5 Gew. % Stabilisator und 0,5 bis 2 Gew.% Quellmittel verwendet, wobei diese Gewichte mit Bezug zur Gesamtzusammensetzung des Gewürzes betrachtet sind.

10. Verfahren nach Anpsruch 7, dadurch gekennzeichnet, daß das Quellmittel bei einer Temperatur von 10 bis 20° C zugesetzt wird.

**Claims**

1. A seasoning or light condiment containing essentially ground seeds of mustard, vinegar and water, characterized in that it further contains, dispersed there in, an inert gas or air in order to provide a foam structure of density 0.77 or below.

2. The seasoning or condiment according to claim 1, characterized in that it further contains one or more stabilizing agents and one or more foaming agents.

3. The seasoning or condiment according to claim 2, characterized in further containing other seasoning or organoleptic additives.

4. A method for preparing the seasoning or condiment according to claim 2, method in which a commercial mustard mass is blended with a stabilizing agent and to the obtained blend is added under stirring a foaming or swelling agent capable to provide a foam by whipping in the presence of air or a gas, characterized in that the stabilizing agent is added at a temperature between 40 and 70° C and the foaming agent is added at a temperature of between 10 and 70° C so as to impart to the mass a foamy structure of density 0.77 or below.

5. A method according to claim 4, characterized in carrying out said whipping after introducing said foaming into the blend of mustard and stabilizing agent.

6. A method according to claim 4, characterized in effecting said whipping before said foaming agent is introduced into the blend of mustard and stabilizing agent, the foaming agent being thus already in the form of a foam.

7. A method according to claim 6, characterized in that the foaming agent is egg albumin.

8. A method according to claim 4, characterized in selecting the stabilizing agent among gelatin, pectin and alginates and selecting the foaming agent among hydrolyzates of case in, soja protein and gluten.

9. A method according to claim 4, characterized in using 1 to 3.5% by weight of stabilizing agent and 0.5 to 2% b.w. of foaming agent, these weights being expressed relative to the total of the seasoning composition.

10. A method according to claim 7, characterized in adding the foaming agent at a temperature of 10-20° C.